# EUROPÄISCHE PATENTSCHRIFT

(11) **EP 2 049 222 B1**
(45) Veröffentlichungstag und Bekanntmachung des Hinweises auf die Patenterteilung: **18.06.2014**
(21) Anmeldenummer: 07786182.1
(22) Anmeldetag: 19.07.2007
(51) Int. Cl.: B01D 29/90

(54) **FILTERVORRICHTUNG**
FILTER APPARATUS
DISPOSITIF DE FILTRATION

(30) Priorität: 08.08.2006 DE 102006036943
(43) Veröffentlichungstag der Anmeldung: 22.04.2009
(73) Patentinhaber: Hydac Process Technology GmbH, 66538 Neunkirchen (DE)
(72) Erfinder: SCHNEIDER, Thomas, 66299 Friedrichsthal (DE); WNUK, Ralf, 66450 Bexbach/Kleinottweiler (DE)
(74) Vertreter: Bartels, Martin Erich Arthur
(86) Internationale Anmeldenummer: PCT/EP2007/006410
(87) Internationale Veröffentlichungsnummer: WO 2008/017370

(56) Entgegenhaltungen:
- WO-A-03/059821
- DE-A1- 3 828 417
- US-A- 3 394 809
- US-B1- 6 176 904

## Beschreibung

Die Erfindung betrifft eine Filtervorrichtung zur Abscheidung von Verunreinigungen aus einem Fluidstrom mittels Einsatz eines Filterelementes, das in einem Filtergehäuse aufgenommen ist, wobei der Drallraum durch eine konische Erweiterung des Filtergehäuses in Richtung eines seiner beiden Gehäuseenden gebildet ist und der Zulauf für das unfiltrierte Medium das Filtergehäuse außermittig zur Längsachse des Filterelementes durchgreift.

Dahingehende hydraulische Filter und Filtervorrichtungen sind in einer Vielzahl von Ausführungsformen (DE 197 11 589 A1) auf dem Markt frei erhältlich. Neben Saugfiltervorrichtungen sind Filtervorrichtungen als Rücklauffilter, Leitungsfilter oder Belüftungsfilter bekannt. Vom Oberbegriff her werden diese häufig als Hydrofilter bezeichnet. Grundsätzlich gilt, dass dahingehende Hydrofi Iter Geräte zum Abscheiden fester Stoffe sind, wobei faserige, körnige oder gitterförmige Filtermedien zum Abscheiden von festen Stoffen aus Flüssigkeiten oder zum Absondern von Stäuben aus Gasen verwendet werden.

Darüber hinaus sind als weitere Abscheidevorrichtungen im Stand der Technik (DE 42 14 324 A1) sog. Zyklone bekannt, bei denen es sich um Geräte handelt, mit denen durch die Wirkung von Zentrifugalkraft Teilchen fester Stoffe aus Gasen oder Flüssigkeiten abgeschieden werden, die man fachsprachlich unter dem Oberbegriff Fluid zusammenfaßt. Bei der vorstehend genannten bekannten Lösung ist der Zyklon in einem von einem Triebwerksraum (Kurbelraum) zu einer Saugleitung eines Verbrennungsmotors führenden Entlüftungsweg angeordnet, so dass von der Luft mitgeführte Aerosole im Zyklon abgeschieden und über einen Auslaß einem Ölsumpf des Verbrennungsmotors zugeführt werden können. Um auch unter extremen Betriebsbedingungen einen ungewollten Zulauf von Öl aus dem Öl-sumpf in den Zyklon verhindern zu können, ist auslaßseitig eine Rückschlagsicherung in Form eines Schwimmerventils angeordnet.

Eine dahingehende Zyklon-Abscheidetechnik hat man auch schon mit Filtereinrichtungen kombiniert eingesetzt. So offenbart die DE-OS 37 35 106 ein Verfahren zur Abscheidung von Ftüssigkeitsteitchen aus Gasen, insbesondere in Form von Aerosolen aus Abgasen, bei denen die Gase vorab zentrifugiert und anschließend gefiltert werden. Ein Teil der Filtratgase wird dann an einen Zyklon weitergeleitet und die im Gasstrom mitgeführten Flüssigkeitsteilchen werden durch häufige Ablenkung ihrer Bewegungsrichtung (Drallströmung) zu Tropfen vereinigt, die durch ihr Eigengewicht aus der Abscheidevorrichtung austreten.

Ferner ist durch die US 6 129 775 A ein Zyklonabscheider bekannt mit einem überwiegend konisch verlaufenden Abscheidegehäuse, in dem der Wandung des Abscheidegehäuses nachfolgend und unter Bildung eines Drallraumes entsprechend beabstandet ein regelmäßig in sich geschlossener Führungskörper angeordnet ist, der dem tangential zugeführten Fluidstrom mit Partikelverschmutzung eine verbesserte Drallführung zur Abscheidung der Partikel im Drallraum ermöglicht. Eine Filtration mittels eines Filterelementes ist mit der bekannten Lösung nicht möglich.

Auch sind im Stand der Technik (EP 06 59 462 A1) Lösungen bekannt, bei denen im Nebenstrom eines Zyklonabscheiders zur weiteren Partikeltrennung ein Filterelement in einem separaten, in Fluidstromrichtung nachfolgenden Filtergehäuse aufgenommen ist. Was die Filtrationsleitung der dahingehend bekannten Lösungen anbelangt, läßt diese noch Wünsche offen.

Eine Filtervorrichtung der eingangs genannten Art ist aus WO 03/059821 A1 bekannt. Bei der bekannten Lösung soll im Bereich einer zylinderförmigen Filterkammer mit dem Filterelement keine Wirbelbildung entstehen, damit ungestört axial im Inneren des Filterelementgehäuses verlaufend Grobverschmutzungen schwerkraftbedingt auf direktem Weg in den unteren Sammelraum gelangen können. Das von dem zylindrischen Filterelement gefilterte Fluid, welches von Verschmutzungen und Mikroorganismen abgereinigt ist, wird wahlweise über eine obere und eine untere Auslassleitung aus dem Filtergehäuse abgeführt. Zur Zerstörung von Bakterien sowie pathogener Keime in dem abgereingten Fluid ist im Bereich der Auslassleitung eine UV-Bestrahlung des Fluids vorgesehen. Hinsichtlich eines energetisch günstigen Betriebs lässt die bekannte Filtervorrichtung noch Wünsche offen.

Durch die US 3 394 809 wird ein Filter aufgezeigt, bei dem ein konischer Filtereinsatz in einem konischen Drallraum aufgenommen ist. Das zur filtrierende Fluid wird durch einen Spiralboden im Kreis um den Filtereinsatz herum bewegt.

Ausgehend von diesem Stand der Technik liegt der Erfindung die Aufgabe zugrunde, eine Filtervorrichtung zu schaffen mit verbesserten Filtrationseigenschaften.

Eine dahingehende Aufgabe löst eine Filtervorrichtung mit den Merkmalen des Patentanspruches 1 in seiner Gesamtheit.

Erfindungsgemäß ist vorgesehen, dass die konische Erweiterung des Filtergehäuses im Bereich des Drallraums in einen zylindrischen Gehäuseteil übergeht oder in einen solchen mit geringerer konischer Neigung, wobei sich das Filterelement ausgehend vom Drallraum zu einem freien Ende hin konisch verjüngt.

Dadurch, das Filtergehäuse derart einen Drallraum aufweist, dass der zu filtrierende Fluidstrom zumindest teilweise in einer Drallströmung um das Filterelement herumgeführt ist, werden für den eigentlichen Filtrationsbetrieb sich die Eigenschaften eines Zyklons insoweit zunutze gemacht, als durch den Drallraum des Filtergehäuses eine mehrfache Ablenkung der Bewegungsrichtung des zu filtrierenden Fluids herbeigeführt ist, wobei die damit einhergehende Drallströmung sich längs der gesamten Filteroberfläche des Filterelementes einstellen kann mit der Folge, dass vermehrt und unter höherem Energieeintrag der zu filtrierende Fluidstrom das Filtereiement passiert, bei gleichzeitiger Zurückhaltung oder Abscheidung von bzw. an Verunreinigungen. Durch die erzielte Drallströmung im Filtergehäuse, hervorgerufen durch die Wirkung des Drallraums, entsteht eine laminare helixartige Fluidströmung, die im Gegensatz zu der sonst üblichen Radialdurchströmung des Filterelementes quer zu seiner Längsachse zu verbesserten Filtrationsleistungen und Ergebnissen führt. Auch läßt sich dergestalt zeitlich eine erhöhte Durchsatzrate an zu filtrierendem Fluid durch das Filterelement erreichen.

Der Drallraum ist durch eine konische Erweiterung des Filtergehäuses in Richtung seines einen Gehäuseendes gebildet, wobei der Zulauf für das unfiltrierte Medium außermittig zur Längsachse des Filterelementes das Filtergehäuse durchgreift. Durch die dahingehende außermittige Einleitung wird das Herbeiführen der zyklonartigen Strömung unter Einwirkung des Drallraums im Filtergehäuse verbessert.

Die konische Erweiterung des Filtergehäuses im Bereich des Drallraums geht in einen zylindrischen Gehäuseteil über oder in einen solchen mit geringerer konischer Neigung mit der Folge, dass es insoweit zu einer Teilberuhigung der drallartigen Fluidströmung kommt mit verringerten Wandabständen zwischen der Außenseite des Filterelementes und der Innenseite des Filtergehäuses, so dass sich eine Art Zwangsführung im Sinne einer verdichteten Fluidströmung ergibt, um dergestalt die Eintragsmenge für das Filterelement an verschmutztem Fluid zu erhöhen.

Bei einer weiteren bevorzugten Ausführungsform der erfindungsgemäßen Filtervorrichtung schließt sich mit einem vorgebbaren axialen Abstand oberhalb des einen freien Endes des Filterelementes ein Sammelraum an, der gleichfalls zur Vergleichmäßigung der Fluidströmung im oberen Bereich mit beiträgt und überkritische Turbulenzen innerhalb der Fluidströmung vermeiden hilft, was ansonsten die Filtrationsleistung der Filtervorrichtung beeinträchtigen könnte.

Als besonders vorteilhaft hat es sich erwiesen, im Hinblick auf den beschriebenen Aufbau des Filtergehäuses als Filterelemente solche einzusetzen, die einen konischen Filterelementverlauf aufweisen. Als weiter besonders vorteilhaft hat es sich auch erwiesen, als Filterelemente sog. Spaltsiebrohr-Filterelemente einzusetzen.

Im folgenden wird die erfindungsgemäße Filtervorrichtung anhand eines Ausführungsbeispiels näher erläutert. Dabei zeigen in prinzipieller und nicht maßstäblicher Darstellung die
- Fig.1: eine perspektivische Ansicht auf die Filtervorrichtung nach Durchführen eines Mitten-Längsschnittes;
- Fig.2: eine perspektivische Ansicht auf die Filtervorrichtung nach der Fig.1 im gehäuseseitig abgeschlossenen Zustand und in einer anderen Betrachtungsrichtung.

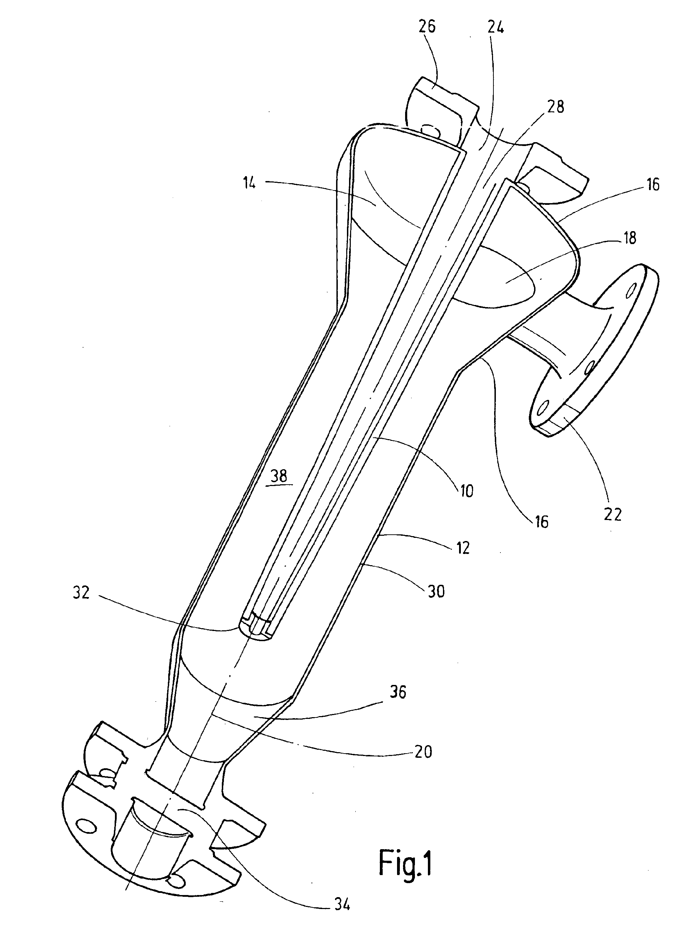

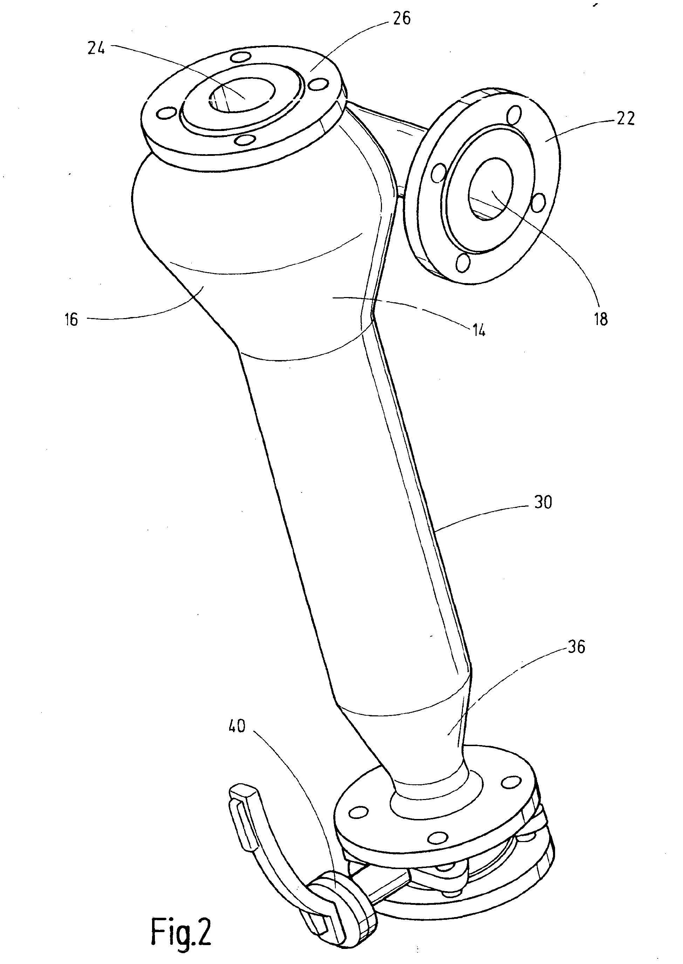

Die erfindungsgemäße Filtervorrichtung dient der Abscheidung von Verunreinigungen aus einem Fluidstrom, beispielsweise gebildet durch ein Hydraulikmedium. Dem Grunde nach ist aber die Filtervorrichtung auch einsetzbar für gasförmige Medien, Aerosole etc., die derart gleichfalls Fluide bilden. Die Darstellung nach den Fig. 1 und 2 entspricht der üblichen Einbaurichtung und soweit im folgenden die Begriffe "oben" und "unten" eingesetzt sind, beziehen diese sich auf die Darstellungen der Betriebssituation der Filtervorrichtung nach den Fig. 1 und 2.

Das in der Fig.1 gezeigte Filterelement 10 ist von einem Filtergehäuse 12 der Filtervorrichtung aufgenommen. Das Filtergehäuse 12 weist an seinem oberen Ende einen Drallraum14 auf, der dazu dient, das zu filtrierende Fluid zumindest teilweise in einer Drall- oder Zyklonströmung um das Filterelement 10 herumzuführen. Bei der gezeigten Lösung ist der Drallraum 14 durch eine konische Erweiterung des Filtergehäuses 12 in Richtung seines oberen Gehäuseendes 16 gebildet. Anstelle einer dahingehenden konischen Erweiterung, erzeugt durch die Gehäusewandung, könnten zusätzlich oder alternativ auf der Innenseite des Filtergehäuses 12 auch Strömungsleitbleche - auch in der Art von Turbulatoren - (nicht dargestellt) eingesetzt sein. Zur Erzeugung der genannten Drallströmung ist der Zulauf 18 für das unfiltrierte Medium außermittig zur Längsachse 20 des Filterelementes 10 angeordnet und durchgreift insoweit die Gehäusewandung am oberen Ende des Drallraums 14. Nach außen hin ist der Zulauf 18 mit einer flanschartigen Verbreiterung 22 versehen, die dem Anschluß weiterer, nicht näher dargestellter fluidführender Rohr- oder sonstiger Leitungselemente dient.

Nach Durchströmen des zu filtrierenden Fluids von außen nach innen durch das Filterelement 10 wird der Filtratstrom, also das filtrierte Fluid, über den Ablauf 24 im Gehäuseboden aus dem Filtergehäuse 12 abgeführt. Das freie Ende des Ablaufs 24 ist wiederum mit einem Flansch 26 versehen, der wie der Flansch 22 dazu dient, fluidführende Leitungen an die Filtervorrichtung anzuschließen. Der Ablauf 24 ist an das obere Ende des Filtergehäuses 12 aufgesetzt und weist im Querschnitt gesehen einen geringfügig größeren Querschnitt auf denn die obere Fluidaustrittsstelle 28 aus dem Filtergehäuse 12. Die genannten Zu- und Abläufe 18 sowie 24 lassen sich gegebenenfalls einstückig zusammen mit dem Filtergehäuse 12 herstellen; es ist aber auch der entsprechende Anschluß über Schweißverbindungen an das sonstige Filtergehäuse 12 möglich.

Wie sich insbesondere aus der Fig.1 des weiteren ergibt, geht die konische Erweiterung, die den Drallraum 14 bildet, in Richtung der Unterseite der Filtervorrichtung in ein zylindrisches Gehäuseteil 30 über, das auch gegenüber dem Drallraum 14 eine geringere konische Neigung (nicht dargestellt) aufweisen kann. Die im Drallraum 14 erzeugte Drallströmung wird dergestalt über das weitere Gehäuseteil 30 von seinem Zyklonverlauf her vergleichmäßigt, was den Fluiddurchtritt durch das Filterelement 10 begünstigt. Hierzu trägt auch die Querschnittsverringerung von Drallraum 14 zu Gehäuseteil 30 mit bei. Das freie Ende 32 des Filterelementes 10 weist in Richtung eines verschlossenen Endes 34 des Filtergehäuses 12, das in einem vorgebbaren axialen Abstand zu dem Filterelement 10 eine Art Sammelraum 36 ausbildet, der trotz der teilweise turbulenten Strömung bedingt durch den Drallraum 14 zu einer Vergleichmäßigung des Fluidstroms führt, der das Filterelement 10 dürchdringt und im übrigen eine gute Füllung im Inneren 38 des Filtergehäuses 12 herstellt, was einem energetisch günstigen Betrieb der Filtervorrichtung zugute kommt.

Insbesondere entstehen dergestalt keine fluidfreien Hohlräume innerhalb der Filtervorrichtung, was ansonsten zu schädigenden Kavitäten für den hydraulischen Kreis führen könnte, der an die Filtervorrichtung im Betrieb angeschlossen ist. Das verschlossene Ende 34 kann auch über eine Umschaltarmatur 40 (siehe Fig.2) hergestellt sein, die beispielsweise als Kugelhahn ausgebildet die Möglichkeit des Öffnens des unteren Endes des Filtergehäuses 12 erlaubt. Dergestalt wäre es beispielsweise möglich, bei geschlossener Umschaltarmatur 40 den bereits beschriebenen Filtrationsbetrieb durchzuführen und bei Öffnung des unteren Endes des Filtergehäuses 12 könnten beispielsweise die bei einem durchzuführenden Rückspülvorgang auftretenden Verschmutzungen dergestalt aus der Filtervorrichtung abgeführt werden. Bei einem dahingehenden Rückspülbetrieb wird vorzugsweise von der Reinseite der Filtervorrichtung her, also über den Ablauf 24 kommend, abgereinigtes Fluid von innen nach außen durch das Filterelement geführt, was zu einer Abreinigung der Durchlässe im Filterelement 10 führt und die dahingehend rückgespülten Verschmutzungen könnten dann über das Innere 38 des Filtergehäuses 12 und über die untere Bodenöffnung des Filtergehäuses 12 aus der Filtervorrichtung ausgetragen werden.

Dem Grunde nach besteht aber auch die Möglichkeit einer Rückspülung für eine Gehäusesituation gemäß der Darstellung nach der Fig.1, bei der man dann von der Reinseite (Ablauf 24) abgereinigtes Fluid in Richtung der Unfiltratseite (Zulauf 18) rückspült, wobei dann dahingehend die Zufuhr an Unfiltrat zu unterbinden wäre. Mit etwas geringerer Neigung als dies für die Gehäusewandung des Drallaumsl4 gilt, verjüngt sich der Sammelraum 36 gleichfalls konisch in Richtung des freien oder verschlossenen Endes 34 des Filtergehäuses 12. Die dahingehende konische Verjüngung erlaubt eine partielle Druckerhöhung im Sammelraum 36 beim Betrieb der Vorrichtung, was sich günstig auf die Gesamtfüllung für die Filtervorrichtung auswirkt.

Das Filterelement 10 ist, wie bereits angesprochen, als Spaltsiebrohr-Filterelement ausgebildet und der nähere Aufbau eines dahingehenden Spaltsiebohr-Filterelementes ist in der DE 197 11 589 A1 aufgezeigt. Das dahingehende Element 10 besteht aus einzelnen Stützstäben, um die unter Freilassen von durch ein Fluid passierbaren Spalten ein Drahtprofil in einzelnen Windungen gewickelt ist, wobei im Bereich einer jeden Berührstelle des Drahtprofils mit dem zuordenbaren Stützstab ein Schweißpunkt angeordnet ist. Für einen verbesserten Filtrationsbetrieb ist das Filterelement 10 konisch ausgebildet, wobei die Windungen des Drahtprofils dabei sich im Durchmesser in Richtung der geneigten Enden der Stützstäbe verringern und die in Richtung der Längsachse 20 gemessene Länge des Spaltsiebrohr-Filterelementes ist ca. 11 x größer als der größte vorhandene Austrittsquerschnitt im Bereich des Auslasses oder Ablaufes 24. Da Spaltsiebrohr-Filterelemente dem Grunde nach bekannt sind, ist in der Fig.1 das dahingehende Element 10 nur von seinem konischen Aufbau her dargestellt.

Durch den konischen Aufbau des Spaltsiebrohr-Filterelementes 10 wird erreicht, dass dem vom Drallraum 14 in das Gehäuseteil 30 eintretenden Fluidstrom ein geringerer Widerstand entgegensetzt wird gegenüber einer Lösung mit ausschließlich zylindrisch aufgebautem Element mit der Folge, dass sich energiegünstig die Druckdifferenz für die gesamte Filtervorrichtung verringert und durch den konischen Aufbau ist ein konstanter Flüssigkeitsstrom beim Rückspülen des Elementes 10 erreicht, wohingegen bei einem zylindrischen Element (nicht dargestellt), das in der vorliegenden Ausführungsform gleichfalls zum Einsatz kommen könnte, die Geschwindigkeit in Längsrichtung desselben ständig zunimmt, was einem gleichmäßigen Einritt in das Innere des Filterelementes entgegenwirkt.

Die Einbauverhältnisse sind dabei derart realisiert, dass in Längsrichtung (Längsachse 20) des Filterelementes 10 gesehen die Baulänge des Drallraums 14 mit seiner konischen Gehäusewandung 16 sowie des Sammelraums 36 mindestens einem Drittel, jedoch weniger als der Hälfte der Einbaulänge des Filterelementes 10 entspricht, wobei die Baulänge des Drallraums 14 im wesentlichen der Baulänge des Sammelraumes 36 entspricht, der vom Ende 32 des Filterelementes 10 bis zum Ende 34 des Filtergehäuses 12 reicht.

Die erfindungsgemäße Filtervorrichtung läßt sich, insbesondere wenn sie bis auf das Filterelement 10 im wesentlichen einstückig aufgebaut ist, ausgesprochen kostengünstig herstellen und mithin in der Art eines Wegwerfartikels betreiben. In Abhängigkeit der auftretenden Drücke kann die Filtervorrichtung auch als Kunststoff-Spritzgießteil ausgebildet sein oder aus metallischen Werkstoffen einschließlich Blech- und Gußwerkstoffen bestehen, wobei die Gehäusewandung 16 des Drallraums 14 in der Art eines Klöpperbodens ausgebildet sein kann.

Bei einer nicht näher dargestellten Weiterausgestaltung der erfindungsgemäßen Filtervorrichtung kann es zusätzlich vorgesehen sein, über eine weitere Auslaßstelle im Bereich des oberen Gehäuseendes 16 des Filtergehäuses 12 unter Schaffung einer Art Überlaufleitung die möglicherweise entstehenden leichten aufschwimmenden Stoffe aus dem Filtergehäuse zu entfernen. Vorzugsweise liegt die dahingehende Abschlußöffnung bezogen auf die Längsachse 20 diametral einander gegenüberliegend zum Zulauf 18 und die Überlaufleitung kann vergleichbar den sonstigen Anschlußstellen über einen entsprechenden Flanschkörper wie dargestellt verfügen.

## Patentansprüche

1. Filtervorrichtung zur Abscheidung von Verunreinigungen aus einem Fluidstrom mittels Einsatz eines Filterelementes (10), das in einem Filtergehäuse (12) aufgenommen ist, wobei das Filtergehäuse (12) derart einen brallraum (14) aufweist, dass der zu filtrierende Fluidstrom zumindest teilweise in einer Drallströmung um das Filterelement (10) herumgeführt ist, wobei der Drallraum (14) durch eine konische Erweiterung des Filtergehäuses (12) in Richtung eines seiner beiden Gehäuseenden (16) gebildet ist und der Zulauf (18) für das unfiltrierte Medi um das Filtergehäuse (12) außermittig zur Längsachse (20) des Filterelementes (10) durchgreift, **dadurch gekennzeichnet, dass** die konische Erweiterung des Filtergehäuses (12) im Bereich des Drallraums (14) in einen zylindrischen Gehäuseteil (30) übergeht oder in einen solchen mit geringerer konischer Neigung, wobei das Filterelement (10) sich ausgehend vom Drallraum (14) zu einem freien Ende (32) hin konisch verjüngt.

2. Filtervorrichtung nach Anspruch 1 oder 2, **dadurch gekennzeichnet, dass** der Ablauf (24) für das filtrierte Fluid das eine Gehäuseende (16) durchgreift und eine Fluidverbindung zum Inneren des Filterelementes (10) herstellt.

3. Filtervorrichtung nach Anspruch 4, **dadurch gekennzeichnet, dass** das freie Ende (32) des Filterelementes (10) in Richtung des anderen Endes (34) des Filtergehäuses (12) weist, das in einem vorgebbaren axialen Abstand zu dem Filterelement (10) eine Art Sammelraum (36) ausbildet.

4. Filtervorrichtung nach Anspruch 5, **dadurch gekennzeichnet, dass** der Sammelraum (36) sich zumindest teilweise in Richtung des anderen Endes (34) des Filtergehäuses (12) konisch verjüngt.

5. Filtervorrichtung nach einem der Ansprüche 1 bis 6, **dadurch gekennzeichnet, dass** das Filterelement (10) als Spaltsiebrohr-Filterelement ausgebildet ist.

6. Filtervorrichtung nach einem der Ansprüche 1 bis 7, **dadurch gekennzeichnet, dass** die in Längsachse (20) des Filterelementes (10) gesehene Baulänge des Drallraums (14) mit seiner konischen Gehäusewandung (16) sowie des Sammelraums (36) mindestens einem Drittel, jedoch weniger als der Hälfte der Einbaulänge des Filterelementes (10) entsprechen.

## Claims

1. A filter apparatus for separating impurities from a fluid stream by using a filter element (10) which is accommodated in a filter housing (12), the filter housing (12) having a swirl space (14) such that the fluid stream which is to be filtered is routed at least partially around the filter element (10) in a swirling flow, the swirl space (14) being formed by a conical widening of the filter housing (12) in the direction of one of its two housing ends (16), and the inlet (18) for the unfiltered medium extending through the filter housing (12) off-centre to the longitudinal axis (20) of the filter element (10), **characterised in that** the conical widening of the filter housing (12) in the region of the swirl space (14) undergoes transition into a cylindrical housing part (30) or into one with a smaller conical tilt, the filter element (10) tapering conically from the swirl space (14) to a free end (32).

2. The filter apparatus according to Claim 1 or 2, **characterised in that** the drain (24) for the filtered fluid extends through one housing end (16) and establishes a fluid connection to the interior of the filter element (10).

3. The filter apparatus according to Claim 4, **characterised in that** the free end (32) of the filter element (10) points in the direction of the other end (34) of the filter housing (12) which forms a type of collecting space (36) a definable axial distance away from the filter element (10).

4. The filter apparatus according to Claim 5, **characterised in that** the collecting space (36) tapers conically at least partially in the direction of the other end (34) of the filter housing (12).

5. The filter apparatus according to any of Claims 1 to 6, **characterised in that** the filter element (10) is made as a slit screen tube filter element.

6. The filter apparatus according to any of Claims 1 to 7, **characterised in that** the overall length of the swirl space (14), as viewed in the longitudinal axis (20) of the filter element (10), with its conical housing wall (16) and of the collecting space (36) correspond to at least one third, but less than half of the installation length of the filter element (10).

## Revendications

1. Dispositif de filtration pour séparer des impuretés d'un courant de fluide en utilisant un élément (10) filtrant, qui est logé dans un corps (12) de filtre, le corps (12) de filtre ayant un espace (14) de tourbillonnement de manière à ce que le courant de fluide à filtrer passe autour de l'élément (10) filtrant au moins en partie suivant un courant tourbillonnant, l'espace (14) de tourbillonnement étant formé par un évasement conique du corps (12) de filtre dans la direction de l'une de ses deux extrémités (16) et l'entrée (18) du milieu non filtré traversant le boîtier (12) de filtre en dehors du milieu par rapport à l'axe (20) longitudinal de l'élément (10) filtrant, **caractérisé en ce que** l'évasement conique du corps (12) de filtre se transforme dans la région de l'espace (14) tourbillonnement en une partie (30) de corps cylindrique ou en une partie telle ayant une inclinaison conique plus petite, l'élément (10) filtrant se rétrécissant coniquement en allant de l'espace (14) de tourbillonnement à une extrémité (32) libre.

2. Dispositif de filtration suivant la revendication 1 ou 2, **caractérisé en ce que** la sortie (24) pour le fluide filtré traverse une extrémité (16) du corps et ménage une liaison fluidique avec l'intérieur de l'élément (10) filtrant.

3. Dispositif de filtration suivant la revendication 1, **caractérisé en ce que** l'extrémité (32) libre de l'élément (10) filtrant est tournée dans la direction de l'autre extrémité (34) du corps (12) de filtre, qui forme une sorte d'espace (36) collecteur à une distance axiale pouvant être prescrite de l'élément (10) filtrant.

4. Dispositif de filtration suivant la revendication 1, **caractérisé en ce que** l'espace (36) collecteur se rétrécit coniquement au moins en partie dans la direction de l'autre extrémité (34) du corps (12) de filtre.

5. Dispositif de filtration suivant l'une des revendications 1 à 4, **caractérisé en ce que** l'élément (10) filtrant est constitué en élément filtrant tubulaire en tamis à barreaux à interstices.

6. Dispositif de filtration suivant l'une des revendications 1 ou 5, **caractérisé en ce que** la longueur de construction, considérée dans la direction (20) longitudinale de l'élément (10) filtrant de l'espace (14) de tourbillonnement ayant sa paroi (16) de corps conique ainsi que de l'espace (36) collecteur représente au moins un tiers, mais moins que la moitié, de la longueur de montage de l'élément (10) filtrant.
